# EUROPÄISCHE PATENTSCHRIFT

(11) **EP 0 807 643 B1**
(45) Veröffentlichungstag und Bekanntmachung des Hinweises auf die Patenterteilung: **28.07.1999**
(21) Anmeldenummer: 97107687.2
(22) Anmeldetag: 10.05.1997
(51) Int. Cl.: C08F 210/02, C08L 23/08, C08F 4/32, C10L 1/18

(54) **Terpolymerisate des Ethylens, ihre Herstellung und ihre Verwendung als Additive für Mineralöldestillate**
Ethylene terpolymers, their preparation and their use as additives for mineral oil distillates
Terpolymères de l'éthylène, leur préparation et leur utilisation pour les distillats d'huile minérale

(30) Priorität: 18.05.1996 DE 19620119
(43) Veröffentlichungstag der Anmeldung: 19.11.1997
(73) Patentinhaber: Clariant GmbH, 65929 Frankfurt am Main (DE)
(72) Erfinder: Krull, Matthias, Dr., 46147 Oberhausen (DE); Reimann, Werner, Dr., 65929 Frankfurt (DE)

(56) Entgegenhaltungen:
- EP-A- 0 184 048
- EP-A- 0 203 554
- EP-A- 0 463 518
- EP-A- 0 493 769
- DE-A- 2 100 058
- US-A- 3 388 977

## Beschreibung

Die vorliegende Erfindung betrifft Terpolymerisate aus Ethylen, dem Vinylester einer oder mehrerer aliphatischer Monocarbonsäuren, die 2 bis 20 Kohlenstoffatome im Molekül enthalten, und Bicyclo[2.2.1]hept-2-en (auch als Norbornen bezeichnet) oder Bicyclo[2.2.1]hept-2-en-Derivaten mit einer bei 140°C gemessenen Schmelzviskosität von 20 bis 10.000 mPa•s. Sie werden mit Erfolg zur Verbesserung der Fließfähigkeit von Mineralölen und Mineralöldestillaten eingesetzt.

Rohöle und durch Destillation von Rohölen gewonnene Mitteldestillate wie Gasöl, Dieselöl oder Heizöl enthalten je nach Herkunft der Rohöle unterschiedliche Mengen langkettiger Paraffine (Wachse) gelöst. Bei niedrigen Temperaturen scheiden sich diese Paraffine als plättchenförmige Kristalle ab, teilweise unter Einschluß von Öl. Hierdurch wird die Fließfähigkeit der Rohöle und der aus ihnen gewonnenen Destillate erheblich beeinträchtigt. Es treten Feststoffablagerungen auf, die häufig zu Störungen bei Gewinnung, Transport und Einsatz der Mineralöle und Mineralölprodukte führen. So kommt es bei niedrigen Umgebungstemperaturen z.B. in der kalten Jahreszeit u.a. bei Dieselmotoren und Feuerungsanlagen zu Verstopfungen der Filter, die eine sichere Dosierung der Brennstoffe verhindern und schließlich in einer Unterbrechung der Kraftstoff- bzw. Heizmittelzufuhr resultieren. Auch das Fördern der Mineralöle und Mineralölprodukte durch Rohrleitungen über größere Entfernungen kann z.B. im Winter durch das Ausfallen von Paraffinkristallen beeinträchtigt werden.

Es ist bekannt, das unerwünschte Kristallwachstum durch geeignete Zusätze zu unterbinden und damit einem Anstieg der Viskosität der Öle entgegenzuwirken. Solche Zusätze, sie sind unter der Bezeichnung Stockpunkterniedriger bzw. Fließverbesserer bekannt, verändern Größe und Form der Wachskristalle und wirken damit einem Anstieg der Viskosität der Öle entgegen.

Das Fließ- und Kälteverhalten von Minerlölen und Mineralöldestillaten wird durch Angabe des Pour-Points (bestimmt nach ISO 3016) und des Cold-Filter-Plugging-Points (CFPP; bestimmt nach EN 116) beschrieben. Beide Kenngrößen werden in °C gemessen.

Typische Fließverbesserer für Rohöle und Mitteldestillate sind Copolymerisate des Ethylens mit Carbonsäureestern des Vinylalkohols. So setzt man nach der DE 11 47 799 B1 Erdöldestillat-Treib- bzw. -Brennstoffen mit einem Siedebereich zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.-% Ethylen und etwa 1 bis 40 Gew.-% Vinylacetat enthalten. Sie sind besondes wirksam, wenn sie durch radikalische Polymerisation in einem inerten Lösungsmittel bei Temperaturen von etwa 70 bis 130°C und Drücken von 35 bis 2.100 atü hergestellt wurden (DE 19 14 756 B2).

Andere als Fließverbesserer eingesetze Polymerisate enthalten neben Ethylen und Vinylacetat z.B. Hexen-1 (vgl. EP 0 184 083 B1), Diisobutylen (vgl. EP 0 203 554 B1) oder ein Isoolefin der allgemeinen Formel 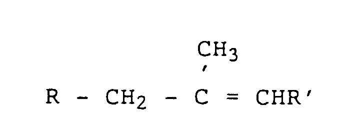 wobei R und R' gleich oder verschieden sind und Wasserstoff oder C₁ - C₄-Alkylreste bedeuten (EP 0 099 646 A1). Terpolymerisate aus Ethylen, Vinylacetat und Neononansäurevinylester bzw. Neodecansäurevinylester als Additive für Mineralöldestillate sind Gegenstand der EP 0 493 769 B1. Auch Mischpolymerisate aus Ethylen, Alkencarbonsäureester und/oder Vinylester und Vinylketon werden als Stockpunkterniedriger und zur Verbesserung des Fließverhaltens von Rohölen und Mitteldestillaten der Rohöle verwendet (vgl. EP 0 111 883 B1).

Die Wirksamkeit der bekannten Zusatzstoffe zur Verbesserung der Eigenschaften von Mineralölfraktionen ist u.a. abhängig von der Herkunft des Mineralöls, aus dem sie gewonnen wurden und damit insbesondere von dessen Zusammensetzung. Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h die Fließeigenschaften von Mineralölen und Mineralölfraktionen unterschiedlicher Herkunft bei tiefen Temperaturen deutlich verbessern. Dennoch gibt es Fälle, in denen sie sich als wenig oder gar nicht brauchbar erweisen, sei es, daß sie nur wenig zur Erhöhung der Fließfähigkeit in der Kälte beitragen oder daß sie die Filtrierbarkeit von Mineralöldestillaten oberhalb des Cloud Points beeinträchtigen. Die Ursachen hierfür sind vielfältig; die Erschließung bisher nicht genutzter Rohstoffe, die geänderte Verarbeitung der Primärprodukte und neue Anforderungen des Marktes seien als Beispiele genannt. Überdies besitzen die bekannten Fließverbesserer einen hohen Eigenstockpunkt. Diese Eigenschaft hat zur Folge, daß sie bei niedrigen Umgebungstemperaturen in beheizten Tanken gelagert und/oder als hochverdünnte Lösungen angewandt werden müssen.

Es bestand daher die Aufgabe, neue Additive zur Verbesserung der Fließfähigkeit solcher Erdölarten oder Erdölfraktionen zu entwickeln, bei denen die Additive des Standes der Technik nur unbefriedigend wirken, die zudem bei niedrigen Umgebungstemperaturen problemlos zu handhaben sind und eine ausreichende Filtrierbarkeit von Erdöldestillaten oberhalb des Cloud Points gewährleisten.

Gegenstand der Erfindung sind Terpolymerisate aus Ethylen, dem Vinylester einer oder mehrerer aliphatischer, linearer oder verzweigter Monocarbonsäuren, die 2 bis 20 Kohlenstoffatome im Molekül enthalten, und Norbornen oder Norbornenderivaten als Einzelverbindung oder als Gemisch aus zwei oder mehr dieser Verbindungen mit einem Anteil von 10 bis 35 Gew.-% Vinylester und 0,5 bis 20 Gew.-% Norbornen oder Norbornenderivaten (jeweils bezogen auf das Terpolymerisat) und einer bei 140°C gemessenen Schmelzviskosität von 20 bis 10.000 mPa•s.

Hinsichtlich der stofflichen Zusammensetzung der neuen Terpolymerisate ist zu beachten, daß die Vinylester aliphatischer Monocarbonsäuren erfindungsgemäß als eine Monomerenkomponente gelten, gleichgültig, ob Bestandteil der Terpolymerisate ein einziger oder mehrere Vinylester von C₂- bis C₂₀-Monocarbonsäuren ist. Das gleiche gilt auch für Norbornen und Norbornenderivate, die als einheitliche Verbindung oder als Gemisch aus zwei oder mehr unterschiedlichen Verbindungen im Terpolymerisat enthalten sein können.

Ein weiterer Gegenstand der Erfindung ist die Verwendung der vorstehend beschriebenen Terpolymerisate zur Verbesserung der Fließfähigkeit von Mineralölen und insbesondere Mineröldestillaten.

Überraschenderweise haben sich die Terpolymerisate der Erfindung hervorragend zur Verbesserung der Fließfähigkeit auch solcher Mineralöle und Mineralöldestillate bewährt, deren Fließverhalten mit den Additiven des Standes der Technik nur unzureichend beeinflußt werden konnte. Eine weitere wertvolle Eigenschaft der neuen Terpolymerisate ist ihr niedriger Eigenstockpunkt in organischen Lösemitteln. Er liegt deutlich unter dem Stockpunkt von Ethylen/Vinylester-Copolymeren. Daher können die neuen Terpolymerisate selbst bei niedrigen Außentemperaturen in unbeheizten Tanken gelagert und ohne vorheriges Erwärmen verwendet werden. Ferner ist ihre gegenüber vergleichbaren Copolymeren des Standes der Technik deutlich niedrigere Einmischtemperatur hervorzuheben, die zu einer verbesserten Filtrierbarkeit der mit ihnen versehenen Mitteldestillate oberhalb des Cloud-Points führt.

Grundsätzlich können die beanspruchten Terpolymerisate als Fließverbesserer sowohl in Rohölen als auch in den durch Destillation gewonnenen Weiterverarbeitungsprodukten der Rohöle eingesetzt werden. Bevorzugt ist jedoch ihre Verwendung in Mineralöldestillaten, insbesondere Mineralölmitteldestillaten. Hierunter werden Kohlenwasserstofffraktionen verstanden, die zwischen 150 und 400°C sieden. Beispiele für derartige Rohöldestillate sind Petroleum, leichte Heizöle und Dieselkraftstoff. Von besonderer Bedeutung sind Mitteldestillate wie Heizöl EL und Dieselkraftstoff.

Der Norbornengehalt im Terpolymerisat wird mittels ¹³C-NMR-Spektroskopie bestimmt. Hierzu wird das Integral des Norbornen-C₂-Signals bei 47 - 51 ppm mit dem Integral der Ethylen- und der restlichen Norbornen-C-Atome im Bereich von 7 bis 43 ppm verglichen.

Für den Einsatz als Fließverbesserer besonders geeignet sind Terpolymerisate gemäß der Erfindung mit einer nach ISO 3219(B) bei 140°C gemessenen Schmelzviskosität von 50 bis 5000 mPa.s, vorzugsweise 30 bis 1.000 mPa.s und insbesondere 50 bis 500 mPa•s. Terpolymerisate höherer Schmelzviskosität setzt man bevorzugt Rohölen, solche niederer Schmelzviskosität, bevorzugt Mitteldestillaten, zu.

Zur Herstellung der erfindungsgemäßen Terpolymerisate aus Ethylen, dem Vinylester einer aliphatischen linearen oder verzweigten Monocarbonsäure, die 2 bis 20 Kohlenstoffatome im Molekül enthält, und Bicyclo[2.2.1]hept-2-en oder dessen Derivaten geht man von Gemischen der Monomeren aus. Feste Monomere wie Norbornen, können zur besseren Dosierung vorteilhafterweise als Lösung (10 - 95 %ig) in inerten organischen Lösemitteln (Toluol, Xylol) dosiert werden. Norbornen und seine Derivate sind aus Cyclopentadien und acyclischen Olefinen durch Diels-Alder-Synthese nach 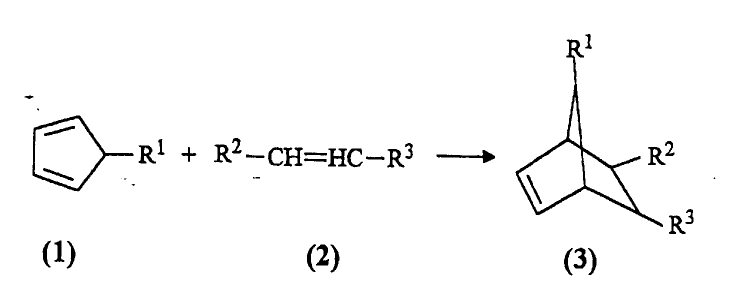 zugänglich. Die Reste R¹, R² und R³ in der vorstehenden Reaktionsgleichung (I) können gleich oder verschieden sein und stehen für Wasserstoff sowie für geradkettige oder verzweigte Alkylreste. Bevorzugte Monomerkomponenten in den Terpolymerisaten gemäß der Erfindung sind Norbornene entsprechend Formel (3), in der R¹, R² und R³ gleich oder verschieden sind und für Wasserstoff oder geradkettige oder verzweigte Alkylreste mit bis zu 20 Kohlenstoffatomen wie Methyl, Ethyl, Propyl, i-Propyl, Pentyl, Octyl, 2-Ethylhexyl, Decyl, Dodecyl, Octadecyl stehen. Besonders bevorzugt als Monomerkomponenten sind Norbornen und 5-Methylnorbornen.

Die Vinylester der aliphatischen Monocarbonsäuren sind Handelsprodukte. Ein gebräuchlicher Weg zu ihrer Herstellung ist die Umsetzung von Carbonsäuren mit Acetylen (vgl. Ullmanns Encyclopädie der Technischen Chemie, 4. Auflage, Bd. 23, S. 598 ff). Die Säurekomponente der Ester kann linear oder verzweigtkettig sein. Bevorzugt werden die Vinylester der Essigsäure, der Propionsäure, der isomeren Buttersäuren, der Laurinsäure, der Neononansäure und der Neodecansäure, vorzugsweise Essigsäurevinylester (Vinylacetat).

Die Copolymerisation der Ausgangsstoffe erfolgt nach bekannten Verfahren (vgl. hierzu z.B. Ullmanns Encyclopädie der Technischen Chemie, 4. Auflage, Bd. 19, Seiten 169 bis 178). Geeignet sind die Polymerisation in Lösung, in Suspension, in der Gasphase und die Hochdruckmassenpolymerisation. Vorzugsweise wendet man die Hochdruckmassepolymerisation an, die bei Drücken von 50 bis 400 MPa, vorzugsweise 100 bis 300 MPa und Temperaturen von 50 bis 350°C, vorzugsweise 100 bis 300°C, durchgeführt wird. Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxidicarbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Monomerengemisch, eingesetzt.

Die gewünschte Schmelzviskosität der Terpolymerisate wird bei gegebener Zusammensetzung des Monomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Iso-butyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Monomerengemisch, angewandt.

Um Polymerisate der beanspruchten Zusammensetzung zu erhalten, setzt man Monomerengemische ein, die außer Ethylen und gegebenenfalls einem Moderator 5 bis 40 Gew.-%, vorzugsweise 10 bis 40 Gew.-% Vinylester und 0,5 bis 30 Gew.-% Norbornen oder Norbornenderivate enthalten.

Mit der von der Zusammensetzung des Terpolymerisats abweichenden Zusammensetzung des Monomerengemischs trägt man der unterschiedlichen Polymerisationsgeschwindigkeit der Monomeren Rechnung. Die Polymerisate fallen als farblose Schmelzen an, die bei Raumtemperatur zu wachsartigen Feststoffen erstarren.

Die Hochdruckmassepolymerisation wird in bekannten Hoch-druckreaktoren, z.B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Benzol oder Toluol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Hierbei können die Monomerenströme unterschiedlich zusammengesetzt sein (EP 0 271 738 B1).

Die erfindungsgemäßen Terpolymerisate werden Mineralölen oder Mineralöldestillaten in Form von Lösungen oder Dispersionen zugesetzt. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphta, ®Shellsol AB, ®Solvesso150, ®Solvesso 200, ®Solvesso 250, ®Exxsol, ®ISOPAR- und Shellsol D-Typen. Durch die neuen polymeren Verbindungen in ihren rheologischen Eigenschaften verbesserte Mineralöle oder Mineralöldestillate enthalten 0,001 bis 2, vorzugsweise 0,005 bis 0,5 Gew.-% Terpolymerisat, bezogen auf das Destillat.

Die erfindungsgemäßen Terpolymerisate können als Fließverbesserer weiterhin in Form von Mischungen eingesetzt werden, die aus Polymeren der beanspruchten Art, jedoch unterschiedlicher qualitativer und/oder quantitativer Zusammensetzung und/oder unterschiedlicher (bei 140°C gemessener) Viskosität bestehen. Derartige Gemische enthalten z.B. Polymerisate mit gleichem Vinylester-, jedoch verschiedenem Ethylen-/Norbornen/Norbornenderivat-Anteil. Das Mischungsverhältnis (in Gewichtsteilen) der beiden Komponenten kann über einen weiten Bereich variiert werden und z.B. 20 : 1 bis 1 : 20, vorzugsweise 10 : 1 bis 1 : 10 betragen. Auf diesem Wege lassen sich gezielt Fließverbesserer individuellen Anforderungen anpassen.

Mit dem gleichen Ergebnis, die Wirksamkeit als Fließverbesserer für bestimmte Substrate zu optimieren, können die erfindungsgemäßen Polymerisate auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind Vinylacetat enthaltende Copolymerisate oder Terpolymerisate des Ethylens, polare Verbindungen, die eine Paraffindispergierung bewirken (Paraffindispergaratoren), sowie Kammpolymere.

So haben sich Mischungen der neuen Terpolymerisate mit Copolymerisaten hervorragend bewährt, die 10 bis 40 Gew.-% Vinylacetat und 60 bis 90 Gew.-% Ethylen enthalten. Nach einer weiteren Ausgestaltung der Erfindung setzt man die beanspruchten Terpolymerisate in Mischung mit Ethylen/Vinylacetat/Neononansäurevinylester-Terpolymerisaten oder Ethylen-Vinylacetat/Neodecan-säurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylacetat und 1 bis 25 Gew.-% der jeweiligen Neoverbindung. Das Mischungsverhältnis der erfindungsgemäßen Terpoylmerisate mit den vorstehend beschriebenen Ethylen/Vinylacetat-Copolymerisaten bzw. den Terpolymerisaten aus Ethylen, Vinylacetat und den Vinylestern der Neononan- bzw. der Neodecansäure beträgt (in Gewichtsteilen) 20 : 1 bis 1 : 20, vorzugsweise 10 : 1 bis 1 : 10.

Zur Verwendung als Fließverbesserer können die neuen Terpolymerisate ferner in Mischung mit Paraffindispergatoren eingesetzt werden. Diese Additive reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4.211.534). Andere Paraffindispergatoren sind Copolymere des Maleinsäureanhydrids und α,β-ungesättigter Verbindungen, die gegebenenfalls mit primären Monoalkylaminen und/oder aliphatischen Alkoholen umgesetzt werden können (vgl. EP 0 154 177), die Umsetzungsprodukte von Alkenyl-spirobislactonen mit Aminen (vgl. EP 0 413 279 B1) und nach EP 0 606 055 A2 Umsetzungsprodukte von Terpolymeren auf Basis α,β-ungesättigter Dicarbonsäureanhydride, α,β-ungesättigter Verbindungen und Polyoxyalkylenether niederer ungesättigter Alkohole.

Schließlich werden in einer weiteren bewährten Variante der Erfindung die neuen Terpolymerisate zusammen mit Kammpolymeren als Fließverbesserer verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem C₆- bis C₂₄- α-Olefin und einem N-C₆- bis C₂₂-Alkylmaleinsäureimid (vgl. EP 0 320 766), ferner veresterte Olefin/Maleinsäureanhydrid-Copolymere, Polymere und Copolymere von α-Olefinen und veresterte Copolymere von Styrol und Maleinsäureanhydrid.

Das Mischungsverhältnis (in Gewichtsteilen) der erfindungsgemäßen Terpolymerisate mit Paraffindispergatoren bzw. Kammpolymeren beträgt jeweils 1 : 10 bis 20 : 1, vorzugsweise 1 : 1 bis 10 : 1.

Die neuen Terpolymerisate und ihre Mischungen untereinander sowie mit Co-Additiven können allein oder auch zusammen mit anderen Zusatzstoffen verwendet werden, beispielsweise mit Entwachsungshilfsmitteln, Korrosionsinhibitoren, Antioxidantien, Lubricity-Additiven oder Schlamminhibitoren.

Durch die nachfolgenden Beispiele wird die Erfindung näher erläutert, jedoch nicht auf die beschriebenen Ausführungsformen beschränkt.

### Beispiele

### Herstellung von Ethylen/Carbonsäurevinylester/Norbornen-Terpolymerisaten (Beispiele 1-7) bzw. Ethylen/Carbonsäurevinylester/5-Methylnorbornen-Terpolymerisaten (Beispiele 8 und 9)

Ethylen, Vinylacetat (Vina) und Norbornen bzw. 5-Methylnorbornen werden unter Zusatz von Propionaldehyd als Molekulargewichtsregler (Moderator), in einem kontinuierlich betriebenen Hochdruckautoklaven von 0,6 1 Inhalt polymerisiert. Hierzu wird das Monomerengemisch, dem als Initiator Bis(2-ethylhexyl)-peroxidicarbonat gelöst in Testbenzin (15 Gew.-%ige Lösung) zugesetzt worden ist, unter Reaktionsdruck von 150 MPa bei 160°C in den Reaktor eingespeist. Norbornen bzw. 5-Methylnorbornen wird dabei als 75 %ige Lösung in Toluol dosiert. Die Verweilzeit der Reaktanten im Autoklaven beträgt etwa 120 Sekunden. In den Tabellen 1a und 1b sind die Polymerisationsbedingungen, in Tabelle 1c die Eigenschaften der erhaltenen Terpolymerisate zusammengestellt.

Der Vinylacetatgehalt wird durch Pyrolyse des Polymerisats bestimmt. Hierzu werden 100 mg des Polymerisats mit 200 mg reinem Polyethylen in einem Pyrolysekolben 5 Minuten bei 450 °C in einem geschlossenen System unter Vakuum thermisch gespalten und die Spaltgase in einem 250 ml-Rundkolben aufgefangen. Das Spaltprodukt Essigsäure wird mit einer NaJ/KJO₃-Lösung umgesetzt und mit Na₂S₂O₃-Lösung das freiwerdende Jod titriert.

Die Bestimmung des Norbornen-Gehalts bzw. 5-Methylnorbornengehalts in den Polymerisaten erfolgt durch ¹³C-NMR-Spektroskopie (Messungen in C₂D₂Cl₄ bei 333 K mit 75,47 MHz Spektrometer MSL 300 der Fa. Bruker).

Die Viskosität wird gemäß ISO 3219 (B) mit einem Rotationsviskosimeter (Haake RV 20) mit Platte-Kegel-Meßsystem bei 140 C gemessen.

**Tabelle 1a:**

| **Herstellung von Norbornen-Terpolymere** | | | | | | |
|---|---|---|---|---|---|---|
| Beispiel Nr. | Einsatz (Gew.-%) | | | Initiator (Gew.-ppm bez. auf Ethylen) | Moderator (Gew.-% bez. auf Monomere) | Ausbeute |
| | C₂H₄ | Vina | Norbornen | | | |
| 1 | 57 | 27 | 16 | 565 | 4,0 | 9,0% |
| 2 | 59,5 | 27 | 13,5 | 525 | 4,0 | 9,2% |
| 3 | 56,5 | 30 | 13,5 | 675 | 3,8 | 10,5% |
| 4 | 62 | 27 | 11 | 300 | 4,0 | 7,7% |
| 5 | 59 | 30 | 11 | 375 | 3,8 | 8,7% |
| 6 | 56 | 33 | 11 | 360 | 3,9 | 8,8% |
| 7 | 58,5 | 33 | 8,5 | 320 | 4,4 | 8,6% |

**Tabelle 1b:**

| **Herstellung von 5-Methylnorbornen-Terpolymeren** | | | | | | |
|---|---|---|---|---|---|---|
| Beispiel Nr. | Einsatz (Gew.-%) | | | Initiator (Gew.-ppm bez. auf Ethylen) | Moderator (Gew.-% bez. auf Monomere) | Ausbeute |
| | C₂H₄ | Vina | 5-Methylnorbornen | | | |
| 8 | 59 | 31 | 10 | 1.500 | 4,1 | 10,7% |
| 9 | 63 | 32 | 5 | 550 | 3,7 | 9,5% |

**Tabelle 1c:**

| **Charakterisierung der Terpolymerisate** | | | |
|---|---|---|---|
| Beispiel Nr. | Vina (Gew.-%) | V₁₄₀(mPa·s) | Cycloolefin |
| 1 | 24,6 | 100 | 14,8% Norbornen |
| 2 | 24,0 | 99 | 12,4% Norbornen |
| 3 | 27,7 | 111 | 12,2% Norbornen |
| 4 | 24,6 | 108 | 10,2% Norbornen |
| 5 | 27,1 | 121 | 9,9% Norbornen |
| 6 | 30,1 | 112 | 9,5% Norbornen |
| 7 | 28,7 | 103 | 7,7% Norbornen |
| 8 | 29,3 | 106 | 10,4% Methylnorbornen |
| 9 | 29,4 | 136 | 5,7% Methylnorbornen |

Die Wirksamkeit der neuen Terpolymerisate wird mit der Wirksamkeit handelsüblicher Fließverbesserer verglichen, nämlich mit einem Ethylen-Vinylacetat-Copolymer (EVA-Copolymer) mit 28 Gew.-% Vinylacetat und einer Schmelzviskosität V₁₄₀ von 290 mPas und einem Ethylen-VinylacetatDiisobutylen-Terpolymerisat (DIB-Terpolymer) mit 28 Gew.% Vinylacetat, einer Schmelzviskosität V₁₄₀ von 275 mPa•s und einer Kurzkettenverzweigung von 8 CH₃-Gruppen pro 100 CH₂-Gruppen des Poly(ethylens).

### Handhabbarkeit der Terpolymerisate

Als Maßstab für die Handhabbarkeit der erfindungsgemäßen Polymerisate dient ihr Pour Point, gemessen nach ISO 3016 an 50 Gew.-%igen Dispersionen in Kerosin bzw. 20 Gew.-%igen Lösungen in Solvent Naphtha (SN).

**Tabelle 2**

| | **20 % in SN** | **50 % in Kerosin** |
|---|---|---|
| Beispiel 1 | -30 °C | -9 °C |
| Beispiel 2 | -24 °C | +3 °C |
| Beispiel 3 | -33 °C | -6 °C |
| Beispiel 4 | -18 °C | 0 °C |
| Beispiel 5 | -21 °C | 0 °C |
| Beispiel 6 | -27 °C | -6 °C |
| Beispiel 7 | -18 °C | 0 °C |
| Beispiel 8 | -36 °C | -9 °C |
| Beispiel 9 | -12 °C | 9 °C |
| E-VA | -9 °C | + 18 °C |
| E-VA-DIB | -15 °C | + 6 °C |

### Charakterisierung der Testöle:

Das Verhalten der neuen Terpolymerisate als Kaltfließverbesserer für Mineralöle wird an den Testölen 1 bis 4 geprüft, deren Eigenschaften in Tabelle 3 zusammengestellt sind.

**Tabelle 3**

| | **Testöl 1** | **Testöl 2** | **Testöl 3** | **Testöl 4** |
|---|---|---|---|---|
| Siedebeginn | 187 °C | 185 °C | 186 °C | 184 °C |
| 30 % | 248 °C | 261 °C | 239 °C | 271 °C |
| 90% | 330 °C | 359 °C | 331 °C | 329 °C |
| Siedeende | 358 °C | 380 °C | 349 °C | 353 °C |
| Cloud Point | -7 °C | 2,9 °C | -7,5 °C | -5 °C |
| CFPP | -12 °C | 0 °C | -9 °C | -9 °C |

### Wirksamkeit der Terpolymerisate

In Tabelle 4 wird die Wirksamkeit der nach den Herstellungsbeispielen erhaltenen Ethylen-Vinylacetat-Norbornen-Terpolymerisate als Additive für Mineralöle und Mineralöldestillate an Hand des CFPP-Tests (Cold Filter Plugging Test nach EN 116) beschrieben. Die Additive werden entweder als 50 %ige Suspensionen in Kerosin oder als 20 Gew.-%ige Lösungen in Solvent Naphtha eingesetzt:

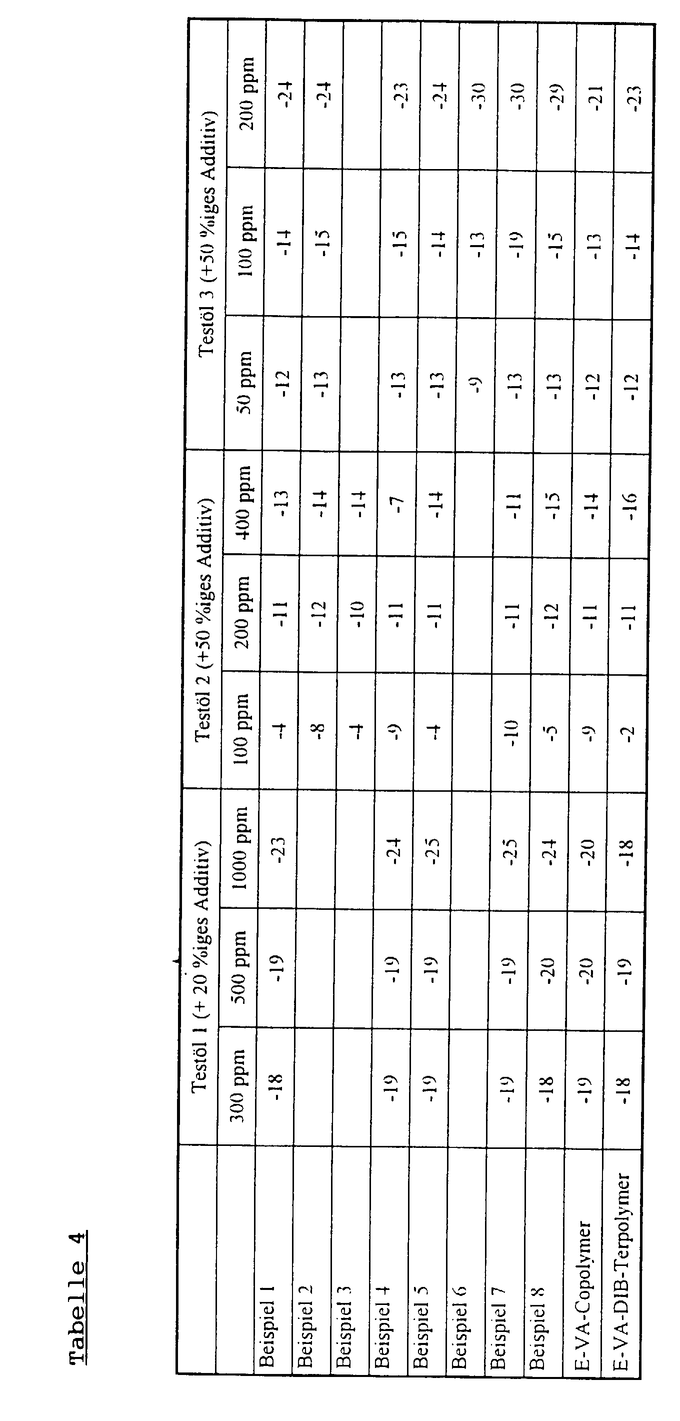

## Patentansprüche

1. Terpolymerisate aus Ethylen, dem Vinylester einer oder mehrerer aliphatischer, linearer oder verzweigtkettiger Monocarbonsäuren, die 2 bis 20 Kohlenstoffatome im Molekül enthalten, und Norbornen oder Norbornenderivaten als Einzelverbindung oder als Gemisch aus zwei oder mehr dieser Verbindungen mit einem Anteil von 10 bis 35 Gew.-% Vinylester und 0,5 bis 20 Gew.-% Norbornen oder Norbornenderivaten (jeweils bezogen auf das Terpolymerisat) und einer bei 140°C gemessenen Schmelzviskosität von 20 bis 10.000 mPa.s.

2. Terpolymerisate nach Anspruch 1, dadurch gekennzeichnet, daß das Norbornenderivat 5-Methylnorbornen ist.

3. Verfahren zur Herstellung von Terpolymerisaten nach Anspruch 1 oder 2, dadurch gekennzeichnet, daß man Monomerengemische, die außer Ethylen 5 bis 40 Gew.-%, vorzugsweise 10 bis 40 Gew.-%, des Vinylesters einer oder mehrerer aliphatischer Monocarbonsäuren, die 2 bis 20 Kohlenstoffatome im Molekül aufweisen, und 0,5 bis 30 Gew.-% Norbornen oder Norbornenderivate (jeweils bezogen auf das Monomerengemisch) und gegebenenfalls einen Moderator enthalten, bei Drücken von 50 bis 400.MPa, vorzugsweise 100 bis 300 MPa und Temperaturen von 50 bis 350°C, vorzugsweise 100 bis 300°C, in Gegenwart eines Radikalkettenstarters polymerisiert.

4. Verfahren nach Anspruch 3, dadurch gekennzeichnet, daß der Moderator ein aliphatischer Aldehyd oder ein aliphatisches Keton ist.

5. Verfahren nach Anspruch 4, dadurch gekennzeichnet, daß der Moderator Propionaldehyd oder Methylethylketon ist.

6. Verfahren nach einem oder mehreren der Ansprüche 3 bis 5, dadurch gekennzeichnet, daß man den Moderator in einer Menge von 0,05 bis 10 Gew.-%, bezogen auf das Monomerengemisch, anwendet.

7. Verfahren nach einem oder mehreren der Ansprüche 3 bis 6, dadurch gekennzeichnet, daß die Polymerisation in Gegenwart von 0,01 bis 20 Gew.-%, vorzugsweise 0,05 bis 10 Gew.-%, bezogen auf das Monomerengemisch eines Radikalkettenstartes, erfolgt.

8. Mischungen enthaltend Terpolymerisate nach Anspruch 1 oder 2 und Ethylen/Vinylacetat-Copolymerisate im Gewichtsverhältnis 20 : 1 bis 1 : 20, vorzugsweise 10 : 1 bis 1 : 10.

9. Mischungen nach Anspruch 8, dadurch gekennzeichnet, daß die Ethylen/Vinylacetat-Copolymerisate 60 bis 90 Gew.-% Ethylen und 10 bis 40 Gew.-% Vinylacetat enthalten.

10. Mischungen enthaltend Terpolymerisate nach Anspruch 1 oder 2 und Ethylen/Vinylacetat/Neononansäurevinylester-Terpolymerisate oder Ethylen/Vinylacetat/Neodecansäurevinylester-Terpolymerisate im Verhältnis (in Gewichtsteilen) 20 : 1 bis 1 : 20, vorzugsweise 10 : 1 bis 1 : 10.

11. Mischungen nach Anspruch 10, dadurch gekennzeichnet, daß die Ethylen/Vinylacetat/Neononansäurevinylester-Terpolymerisate bzw. die Ethylen/Vinylacetat/Neodecansäurevinylester-Terpolymerisate außer Ethylen 10 bis 35 Gew.-% Vinylacetat und 1 bis 25 Gew.-% Neononansäurevinylester bzw. Neodencansäurevinylester enthalten.

12. Mischungen enthaltend Terpolymerisate nach Anspruch 1 oder 2 und Paraffindispergatoren im Verhältnis (in Gewichtsteilen) 1 : 10 bis 20 : 1, vorzugsweise 1 : 1 bis 10 : 1.

13. Mischungen enthaltend Terpolymerisate nach Anspruch 1 oder 2 und Kammpolymere im Verhältnis (in Gewichtsteilen) 1 : 10 bis 20 : 1, vorzugsweise 1 : 1 bis 10 : 1.

14. Mineralöle oder Mineralöldestillate, die 0,0005 bis 1 Gew.-%, vorzugsweise 0,001 bis 0,5 Gew.-% (bezogen auf das Mineralöldestillat) eines Terpolymerisats nach Anspruch 1 oder 2 oder Mischungen nach einem der Ansprüche 8 bis 13 enthalten.

## Revendications

1. Terpolymères d'éthylène, de l'ester de vinyle d'un ou de plusieurs acides monocarboxyliques aliphatiques, à chaîne linéaire ou ramifiée, qui contiennent 2 à 20 atomes de carbone dans la molécule, et de norbornène ou de dérivés du norbornène, sous la forme d'un composé unique ou d'un mélange de deux ou plusieurs de ces composés ayant une teneur de 10 à 35% en poids d'ester de vinyle et de 0,5 à 20% en poids de norbornène ou de dérivés du norbornène (respectivement par rapport au terpolymère) et une viscosité à l'état fondu mesurée à 140°C de 20 à 10000 mPa·s.

2. Terpolymères selon la revendication 1, caractérisés en ce que le dérivé du norbornène est le 5-méthylnorbornène.

3. Procédé pour la préparation de terpolymères selon la revendication 1 ou 2, caractérisé en ce qu'on fait polymériser des mélanges de monomères, qui contiennent en plus de l'éthylène 5 à 40% en poids, de préférence 10 à 40% en poids, de l'ester de vinyle d'un ou de plusieurs acides monocarboxyliques aliphatiques, qui présentent 2 à 20 atomes de carbone dans la molécule, et 0,5 à 30% en poids de norbornène ou de dérivés du norbornène (respectivement par rapport au mélange de monomères) et éventuellement un modérateur, à des pressions de 50 à 400 MPa, de préférence de 100 à 300 MPa et à des températures de 50 à 350°C, de préférence de 100 à 300°C, en présence d'un initiateur de chaîne radicalaire.

4. Procédé selon la revendication 3, caractérisé en ce que le modérateur est un aldéhyde aliphatique ou une cétone aliphatique.

5. Procédé selon la revendication 4, caractérisé en ce que le modérateur est le propionaldéhyde ou la méthyléthylcétone.

6. Procédé selon une ou plusieurs des revendications 3 à 5, caractérisé en ce qu'on utilise le modérateur en une quantité de 0,05 à 10% en poids, par rapport au mélange de monomères.

7. Procédé selon une ou plusieurs des revendications 3 à 6, caractérisé en ce que la polymérisation est effectuée en présence de 0,01 à 20% en poids, de préférence de 0,05 à 10% en poids, par rapport au mélange de monomères, d'un initiateur de chaîne radicalaire.

8. Mélanges contenant des terpolymères selon la revendication 1 ou 2 et des copolymères éthylène/acétate de vinyle dans le rapport en poids de 20 : 1 à 1 : 20, de préférence de 10 : 1 à 1 : 10.

9. Mélanges selon la revendication 8, caractérisés en ce que les copolymères éthylène/acétate de vinyle contiennent 60 à 90% en poids d'éthylène et 10 à 40% en poids d'acétate de vinyle.

10. Mélanges contenant des terpolymères selon la revendication 1 ou 2 et des terpolymères éthylène/acétate de vinyle/néononanoate de vinyle ou des terpolymères éthylène/acétate de vinyle/néodécanoate de vinyle dans le rapport (en parties en poids) de 20 : 1 à 1 : 20 de préférence de 10 : 1 à 1 10.

11. Mélanges selon la revendication 10, caractérisés en ce que les terpolymères éthylène/acétate de vinyle/néononanoate de vinyle ou les terpolymères éthylène/acétate de vinyle/néodécanoate de vinyle contiennent en plus de l'éthylène 10 à 35% en poids d'acétate de vinyle et 1 à 25% en poids de néononanoate de vinyle ou néodécanoate de vinyle.

12. Mélanges contenant des terpolymères selon la revendication 1 ou 2 et des agents dispersants de la paraffine dans le rapport (en parties en poids) de 1 : 10 à 20 : 1, de préférence de 1 : 1 à 10 : 1.

13. Mélanges contenant des terpolymères selon la revendication 1 ou 2 et des polymères en peigne dans le rapport (en parties en poids) de 1 : 10 à 20 : 1, de préférence de 1 : 1 à 10 : 1.

14. Huiles minérales et distillats d'huiles minérales, qui contiennent 0,0005 à 1% en poids, de préférence 0,001 à 0,5% en poids (par rapport au distillat d'huile minérale) d'un terpolymère selon la revendication 1 ou 2 ou de mélanges selon l'une des revendications 8 à 13.

## Claims

1. A terpolymer of ethylene, the vinyl ester of one or more aliphatic, linear or branched monocarboxylic acids containing from 2 to 20 carbon atoms in the molecule and norbornene or norbornene derivatives, as a single compound or as a mixture of two or more of these compounds, having a proportion of from 10 to 35% by weight of vinyl ester and from 0.5 to 20% by weight of norbornene or norbornene derivatives (in each case based on the terpolymer) and a melt viscosity measured at 140°C of from 20 to 10,000 mPa·s.

2. A terpolymer as claimed in claim 1, wherein the norbornene derivative is 5-methylnorbornene.

3. A process for preparing terpolymers as claimed in claim 1 or 2, which comprises polymerizing monomer mixtures comprising, apart from ethylene, from 5 to 40% by weight, preferably from 10 to 40% by weight, of the vinyl ester of one or more aliphatic monocarboxylic acids having from 2 to 20 carbon atoms in the molecule and from 0.5 to 30% by weight of norbornene or norbornene derivatives (in each case based on the monomer mixture) and, if desired, a moderator at pressures of from 50 to 400 MPa, preferably from 100 to 300 MPa, and temperatures of from 50 to 350°C, preferably from 100 to 300°C, in the presence of a free-radical chain initiator.

4. The process as claimed in claim 3, wherein the moderator is an aliphatic aldehyde or an aliphatic ketone.

5. The process as claimed in claim 4, wherein the moderator is propionaldehyde or methyl ethyl ketone.

6. The process as claimed in one or more of claims 3 to 5, wherein the moderator is employed in an amount of from 0.05 to 10% by weight, based on the monomer mixture.

7. The process as claimed in one or more of claims 3 to 6, wherein the polymerization is carried out in the presence of from 0.01 to 20% by weight, preferably from 0.05 to 10% by weight, based on the monomer mixture, of a free-radical chain initiator.

8. A mixture comprising terpolymers as claimed in claim 1 or 2 and ethylene-vinyl acetate copolymers in a weight ratio of from 20:1 to 1:20, preferably from 10:1 to 1:10.

9. A mixture as claimed in claim 8, wherein the ethylene-vinyl acetate copolymers comprise from 60 to 90% by weight of ethylene and from 10 to 40% by weight of vinyl acetate.

10. A mixture comprising terpolymers as claimed in claim 1 or 2 and ethylene-vinyl acetate-vinyl neononanoate terpolymers or ethylene-vinyl acetate-vinyl neodecanoate terpolymers in a weight ratio of from 20:1 to 1:20, preferably from 10:1 to 1:10.

11. A mixture as claimed in claim 10, wherein the ethylene-vinyl acetate-vinyl neononanoate terpolymers or the ethylene-vinyl acetate-vinyl neodecanoate terpolymers comprise, apart from ethylene, from 10 to 35% by weight of vinyl acetate and from 1 to 25% by weight of vinyl neononanoate or vinyl neodecanoate.

12. A mixture comprising terpolymers as claimed in claim 1 or 2 and paraffin dispersants in a weight ratio of from 1:10 to 20:1, preferably from 1:1 to 10:1.

13. A mixture comprising terpolymers as claimed in claim 1 or 2 and comb-like polymers in a weight ratio of from 1:10 to 20:1, preferably from 1:1 to 10:1.

14. A mineral oil or mineral oil distillate containing from 0.0005 to 1% by weight, preferably from 0.001 to 0.5% by weight (based on the mineral oil distillate), of a terpolymer as claimed in claim 1 or 2 or a mixture as claimed in any of claims 8 to 13.
